(19) Europäisches Patentamt
European Patent Office
Office européen des brevets

(11) **EP 2 088 707 A1**

(12) **EUROPEAN PATENT APPLICATION**

(43) Date of publication:
**12.08.2009 Bulletin 2009/33**

(51) Int Cl.:
***H04L 1/00*** (2006.01)

(21) Application number: **08002303.9**

(22) Date of filing: **07.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nokia Siemens Networks Oy**
**02610 Espoo (FI)**

(72) Inventors:
• **Rohde, Harald, Dr.**
**81673 München (DE)**

• **Schmidt, Ernst-Dieter**
**83620 Feldkirchen-Westerham (DE)**
• **Xie, Changsong, Dr.**
**81739 München (DE)**

(74) Representative: **Krombach, Rainer**
**Nokia Siemens Networks GmbH & Co. KG**
**Postfach 80 17 60**
**81617 München (DE)**

(54) **Method and device for processing data in an optical network and communication system comprising such device**

(57)    A method and a device are provided, said method comprising the step of data processing in an optical network utilizing a flexible forward error correction. Furthermore, a communication system comprising a corresponding device is suggested.

**Fig.4**

| Length of information *k* (bytes) | Interleaving depth | Lengths of information data (bytes) | Length of coded packets *n* (bytes) |
|---|---|---|---|
| 1 … 119 | 1 | k | 17 … 135 |
| 120 … 238 | 2 | 119, k-119 | 152 … 270 |
| 239 … 357 | 3 | 119,119, k-238 | 287 … 405 |
| 358 … 476 | 4 | 119,119,119,k-3*119 | 422 … 540 |
| 477 … 595 | 5 | 119, 119, …, k-4*119 | 557 … 675 |
| 596 … 714 | 6 | 119, 119, …, k-5*119 | 692 … 810 |
| 715 … 833 | 7 | 119, 119, …, k-6*119 | 827 … 945 |
| 834 … 952 | 8 | 119, 119, …, k-7*119 | 962 … 1080 |
| 953 … 1071 | 9 | 119, 119, …, k-8*119 | 1097 … 1215 |
| 1072 … 1190 | 10 | 119, 119, …, k-9*119 | 1232 … 1350 |
| 1191 … 1309 | 11 | 119, 119, …, k-10*119 | 1367 … 1485 |
| 1310 … 1428 | 12 | 119, 119, …, k-11*119 | 1502 … 1620 |
| 1429 … 1547 | 13 | 119, 119, …, k-12*119 | 1637 … 1755 |
| 1548 … 1666 | 14 | 119, 119, …, k-13*119 | 1772 … 1890 |
| 1667 … 1785 | 15 | 119, 119, …, k-14*119 | 1907 … 2025 |
| 1786 … 3824 | 16 | See case 2 | 2042 … 4080 |
| > 3824 | See case 3 | See case 3 | See case 3 |

EP 2 088 707 A1

**Description**

The invention relates to a method and to a device for processing data in an optical network. It further relates to a communication system comprising such a device.

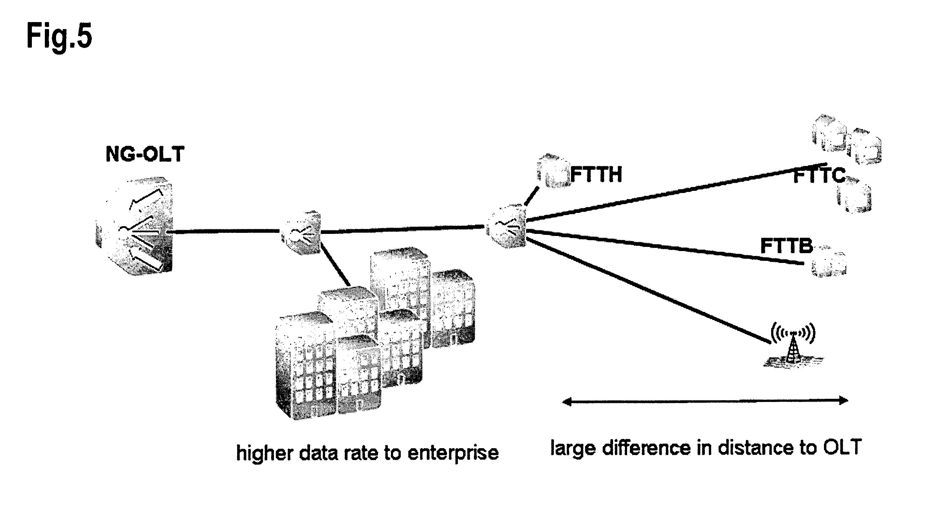

**Fig.5** depicts a passive optical network (PON) comprising a single Optical Line Termination (OLT) that handles a number of subscriber units (Optical Network Units, ONUs) over a split-fiber infrastructure. Further, a single OLT may be provided for different types of users, e.g., private users, small/medium/large enterprises, wireless stations by Fiber To The Wireless (FTTW) and/or (outdoor) Digital Subscriber Line Access Multiplexers (DSLAMs), which feed a number of DSL users at the Network Terminations (NTs). Wireless stations may be base stations and/or femto access points.

In a high speed passive optical access network (PON), e.g., with a data rate of 10GBit/s the upstream transmission suffers from various impairments, e.g., fiber attenuation, splitting attenuation, fiber dispersion, noise out of the components in the whole link, receiving power variation from different subscribers, inadequate adjustment of automatic gain control, inadequate clock and phase alignment. This makes a cost-efficient receiver not sensitive enough to recover data in a required quality.

In order to improve the performance, forward error correction (FEC) is used. According to [3], the ITU recommends GPON to apply a Reed-Solomon code, RS(255,239).

The RS(255,239) code is a linear cyclic code in $GF(2^8)$ with 239 information bytes out of 255 bytes code word, capable of correcting up to 8 bytes errors per code word. In fact, it has a net coding gain $5.4dB@10^{-10}$ on an additive white Gaussian noise (AWGN) channel.

According to [1] or [2], using the FEC in 2.5Gbit/s and 10Gbit/s PON can result in 2dB to 3dB coding gain. According to G.709, G975.1, the RS(255,239) code was recommended for error protection in optical transport networks.

Optical access networks preferably provide a point to multipoint architecture in a downlink direction and a multipoint to point architecture in an uplink direction. In said uplink direction, data packets from different subscribers (ONT) are conveyed over a channel in an asynchronous TDM burst-mode with variable frame length and arrive at an OLT receiver with varying signal strength. This, however, makes a design of the FEC for 10Gbit/s optical access networks difficult.

Furthermore, today's users of the PON are connected with quite uniform quality and length and/or attenuation of the access fiber. Next Generation PON Systems are designed such that all users get the same transmission quality, i.e. the user with the worst access line determines the data rates for all users. This, however, bears the disadvantage, that the highest data rate for each individual client is limited to the data rate of the worst connection.

The **problem** to be solved is to overcome the disadvantages stated above and in particular to allow efficient forward error correction mechanisms to be applied in particular utilizing individualization of data rates in an optical network.

This problem is solved according to the features of the independent claims. Further embodiments result from the depending claims.

In order to overcome this problem, a method for data processing in an optical network is suggested utilizing a flexible forward error correction.

This approach hence allows for efficient utilization of FEC schemes in, e.g., 10Gbit/s optical access networks. In order to achieve similar performance using the same Reed-Solomon code as with the transport network, an adaptive interleaving scheme for burst-mode transmission is suggested.

For example, for burst errors the probability that the number of errors in a code word may exceed the error correction capability is much higher than that of random errors, i.e., burst errors are unfavorable to FEC. Hence, an interleaving technique is suggested that is able to somewhat randomize said burst errors such that the burst errors are somewhat uniformly distributed in a set of code words. This is in particular important as data packets in the passive optical network (PON) can vary from a few bytes to a few hundred thousand bytes and the burst error lengths of each data packet may be comparatively constant.

This approach allows an adaptation of the overhead and/or payload ratio depending on the quality of the optical access line. The overall data rate (i.e. overhead and payload data) remains substantially constant (e.g., 2.5Gbit/s) while a user that is located farther away gets a higher overhead-to-payload ratio, thus reducing his effective payload data rate, but still enabling transmission. A user with a very good connection might not need any FEC at all, thus getting the best possible data rate.

In total, this approach can result in supplying a higher number of users with traffic at a guaranteed bit rate in case of full network load and good signal quality. The overall capacity of the optical network is efficiently utilized by this approach.

In an embodiment, said data processing comprises transmission of user data via said optical network.

The approach may also be applicable for Wavelength Division Multiplexing (WDM) and/or Wavelength Division Multiplex Access (WDMA) PONs.

In another embodiment, said data is or comprises at least one single data burst.

The approach may be applicable for all systems providing any kind of burst-mode transmission, e.g., TDM and/or TDMA systems.

In a further embodiment, said flexible forward error correction comprises adaptive interleaving.

In a next embodiment, said forward error correction utilizes at least one Reed-Solomon code and/or any other coding scheme comprising and/or providing interleaving.

It is also an embodiment that said forward error correction is adapted based on a quality-of-service requirement.

Hence, the FEC may be adjusted in order to provide a certain degree of quality-of-service to a user or a group of users.

Pursuant to another embodiment, said flexible forward error correction is adapted depending on a quality of an optical access line.

According to an embodiment, the flexible forward error correction is utilized by adapting an overhead-to-payload ratio.

According to another embodiment, the flexible forward error correction is utilized depending on a signal quality. In particular, said signal quality may be determined by measurement and/or via a logical or physical feedback channel.

In yet another embodiment, the forward error correction is adjusted pursuant to a bit error rate determined.

According to a next embodiment, user data determines a block size comprising said forward error correction. Preferably, said block may comprise data portions each comprising a forward error correction data. In particular, said block may be coded by utilizing adaptive interleaving.

Pursuant to yet an embodiment, the approach may be utilized by an encoder, in particular by a transmitter comprising such encoder.

It is also an option that the approach may be utilized by a decoder, in particular by a receiver comprising such decoder.

The problem stated above is also solved by a device for data processing comprising a processor unit that is equipped and/or arranged such that the method as described herein is executable on said processor unit.

Furthermore, a hard-wired or programmable logic device (e.g., an FPGA or an ASIC) may be provided to process the steps of the method as described.

According to an embodiment, the device is a communication device, in particular a transmitter and/or a receiver.

The problem stated supra is further solved by a communication system comprising the device as described herein.

Embodiments of the invention are shown and illustrated in the following figures:

Fig.1    shows an interleaving, coding frame structure and a transmission order for information data of less than 1875 bytes;

Fig.2    shows an interleaving, coding frame structure and a transmission order for information data of a length between 1876 bytes and 3824 bytes;

Fig.3    shows an interleaving, coding frame structure and a transmission order for information date of 3824 bytes length;

Fig.4    shows a table comprising a length of information (k bytes) to be processed, a resulting interleaving depth, a length of information data (in bytes) and a length of coded packets (n bytes).

According to ITU recommendation G.709 and G.975.1 an interleaving depth amounts to 16. If the RS(255,239) code is used as an FEC scheme, an interleaving frame has

$$16 * 239 = 3824 \text{ information bytes.}$$

The FEC scheme can correct an error with a maximum length of 16*8 bytes (1024 bits). That corresponds to an error duration of about 100ns at a date rate of 10Gbit/s. Such error correction may apply for burst errors in a PON providing burst mode transmission. However, such burst-mode transmission unfortunately has variable packet length (from a few bytes to a few thousand bytes). Hence, a fixed interleaving frame is not bandwidth-efficient, as lots of redundant bytes would be wasted in case of short packets.

The approach provided herewith allows to efficiently adjust an interleaving scheme that is bandwidth-efficient and provides a reasonable burst-error correction capability.

For example, a RS(255,239) code can be used as an FEC scheme supplemented by an adaptive interleaving.

Preferably, shorter packets may utilize an adjusted forward error correction scheme or code, in particular a shortened RS code. This bears the advantages that a significant error correction capability is provided and that a deeper interleaving frame can be built so that burst-errors are highly dispersed throughout the code words within the frame.

This approach is in particular useful for burst-mode transmission. In such case, burst errors are likely to occur at the beginning of a packet and an average burst-error length may be equal for variable packet length. An FEC scheme, which adaptively sets the error correction capabilities, may adaptively set the interleaving depth as described hereinafter. In that way, the trade-off between randomization of the errors (depending on the interleaving depth) and the overhead (resulting from shortening of the code) can be properly met. The following examples (cases 1 to 3) select depths of interleaving and numbers of info-bytes in a shortened code. Other values may be chosen to adjust said forward error correction in a different way.

Case 1:

If a length of information data k is less than 1875 bytes, the interleaving depth m amounts to

$$m = \left[\frac{k-1}{119}\right] + 1 \, .$$

It is noted that the amount of 1875 bytes is arbitrarily chosen to be beneficial. Every other data length may be utilized in a similar manner.

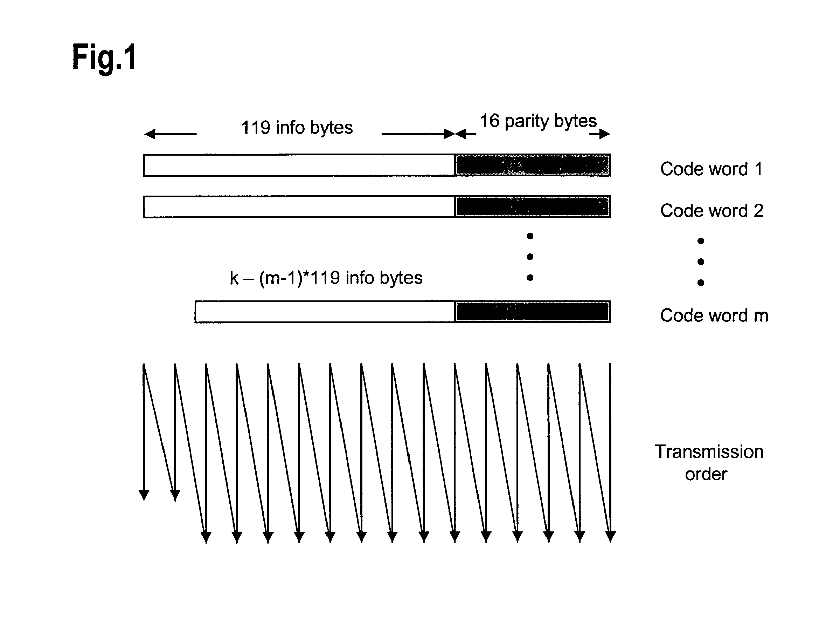

An according interleaving frame structure is shown in **Fig.1.** In Fig.1 the data packet comprises m code words, wherein code words 1 to m-1 each comprises 119 info bytes and 16 parity bytes, the latter being used for forward error correction purposes.

The code word m comprises

```
k - (m-1) * 119 info bytes.
```

The transmission order used for interleaving is also shown at the bottom of Fig.1: The data packet is hence scrambled one column after the other thereby distributing said burst errors to several code words and hence the error correction capabilities of every code word are used in an efficient way.

Case 2:

If the length of information data k is between 1876 and 3824 bytes, the interleaving depth m may be set to 16.

A number of information bytes of the first 15 code words amounts to

$$\left[\frac{k-1}{16}\right] + 1 \, ,$$

the number of information bytes of the last code word amounts to

$$k - 16 - 16\left[\frac{k-1}{16}\right] \, .$$

Case 3:

If the length of the information data k is more than 3824 bytes, the whole encoded data will be divided into multiple blocks of 3824 bytes.

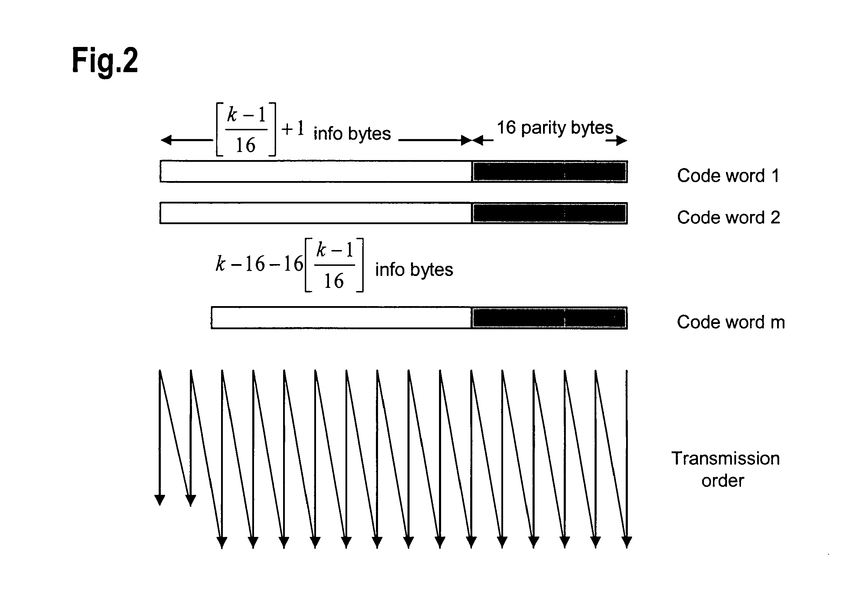

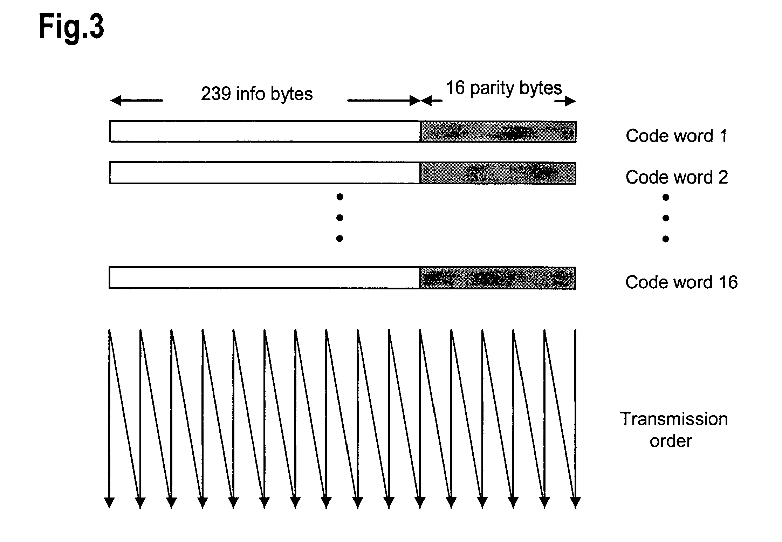

Interleaving and coding is shown in **Fig.3** for a block of 3824 bytes (239 info bytes * 16 code words). The remaining data block with less than 3824 bytes is processed as shown in Fig.1 or Fig.2 above (case 2 or case 3).

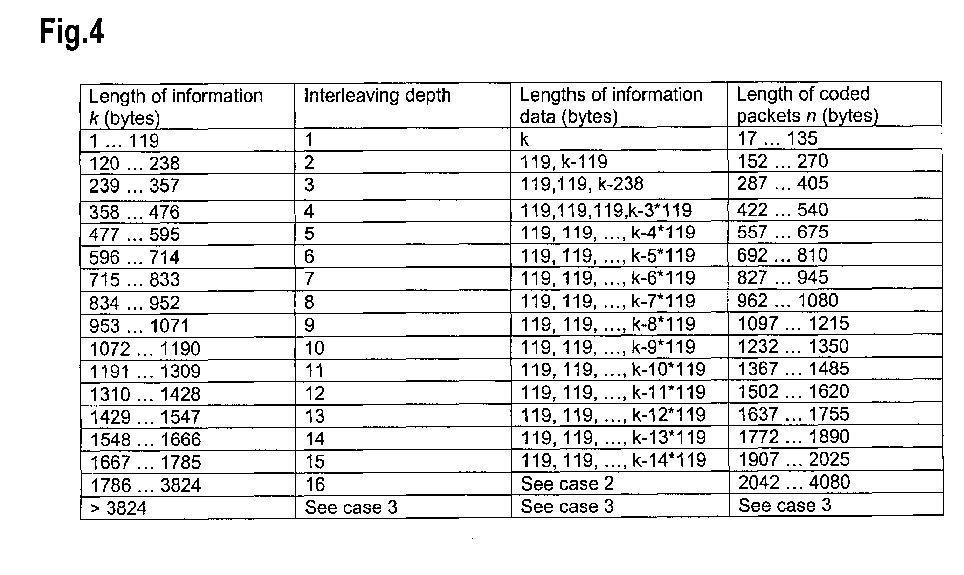

**Fig.4** shows a table comprising a length of information (k bytes) to be processed, a resulting interleaving depth, a length of information data (in bytes) and a length of coded packets (n bytes).

At a transmitter side, there may be an one-to-one mapping between a length of information bytes and the interleaving structure.

Vice versa, at a receiver, there may be a one-to-one mapping between the length of the coded data packet and the de-interleaving structure.

This guarantees a non-ambiguous framing for interleaver and de-interleaver regarding variable packet lengths. The required memory for interleaving and/or de-interleaving may advantageously amount to 4080 bytes.

In case of short error bursts (<3824), the shortened RS(255,239) code can be used thereby providing only minor overhead. Advantageously, even such shortened FEC allows an improved error correction capability, since the shortened code can also correct up to 8 error symbols.

Implementation example:

The implementation can be described in an algorithm, which can be realized in an FPGA or in an ASIC:

Transmitter

(1) Get the length (in bytes) of the information data to be conveyed;
(2) Divide the information data into segments according to Fig.4;
(3) Encode each information segment using a standard/shortened RS(255,239) code;
(4) Output the encoded data in the order described in, e.g., Fig.1.

Receiver

(1) Get the length (in bytes) of the coded data received;
(2) Determine the interleaving depth according to Fig.4;
(3) Reorder interleaved data to its original order and determine code words according to Fig.1;
(4) Decode each code word using the standard/shortened RS(255,239) code;
(5) Output the information bits sequentially word by word.

Further Utilization of the FEC:

When connecting a new user, such user may obtain the highest overhead-to-payload ratio.

Based on an actual number of errors corrected, the quality of the transmission line can be determined and the FEC codes can be adapted accordingly.

Hence, this approach allows adaptation of the data rate according to the quality of the user's connection and/or according to the service the user signed up for.

For example, if the user is willing to pay for a high-quality service, additional FEC information can be provided in order to ensure a high accuracy of data (even at a (slightly) reduced data rate).

A correction capability may be controlled by shortening of the codes. A link of poor transmission quality could be provided with such shortened code (e.g., RS code) and higher interleaving depth.

As an additional functionality, scaling of the bit-rate (10GBit/s, 5GBit/s, etc.) could be utilized.

Further advantages:

The approach provided advantageously allows to adaptively adjust the error correction capabilities as well as an interleaving depth of a data block according to an error burst length expected. The approach efficiently uses the parity information (forward error correction) in an efficient way thereby reducing an overhead that would be inefficient due to the data size to be transmitted.

Further, the approach may require only little additional hardware and only marginal additional software compared to existing solutions. Hence, the improvement suggested can be realized without significant additional expenditure.

**References:**

[1] Y. Yi, S. Verschuere, et al., "Simulation and Experiments on the Effective Optical Gain of FEC in a GPON Uplink", IEEE Photonics Technology Letters, Vol. 19, No.2, Jan. 15, 2007.

[2] D. Nesset, R. Davey, D. Shea, P. Kirkpatrick, S.Q. Shang, M. Lobel, B. Christensen, "10Gbit/s Bidirectional Transmission in 1024-way Split, 110 km Reach, PON System using Commercial Transceiver Modules, Super FEC and EDC", ECOC 2005, Tul.3.1 (2005)

[3] ITU-T G.984.3, "Gigabit-capable Passive Optical Networks (G-PON): Transmission convergence layer specification", Feb. 2004.

**Abbreviations:**

| | |
|---|---|
| AWGN | Additive White Gaussian Noise |
| BER | Bit Error Rate |
| FEC | Forward Error Correction |
| GPON | Gigabit PON |
| OLT | Optical Line Terminal |
| ONT | Optical Network Terminal |
| PON | Passive Optical Network |
| RS | Reed-Solomon |
| SDH | Synchronous Digital Hierarchy |
| SONET | Synchronous Optical NETworks |
| TDM | Time Division Multiplexing |

## Claims

1. A method for data processing in an optical network utilizing a flexible forward error correction.

2. The method according to claim 1, wherein said data processing comprises transmission of user data via said optical network, in particular via a passive optical network.

3. The method according to any of the preceding claims, wherein said data is or comprises at least one single data burst.

4. The method according to any of the preceding claims, wherein said flexible forward error correction comprises adaptive interleaving.

5. The method according to any of the preceding claims, wherein said forward error correction utilizes at least one Reed-Solomon code and/or any other coding scheme comprising and/or providing interleaving.

6. The method according to any of the preceding claims, wherein said forward error correction is adapted based on a quality-of-service requirement.

7. The method according to any of the preceding claims, wherein said flexible forward error correction is adapted depending on a quality of an optical access line.

8. The method according to any of the preceding claims, wherein the flexible forward error correction is utilized by adapting an overhead-to-payload ratio.

9. The method according to any of the preceding claims, wherein the flexible forward error correction is utilized depending on a signal quality.

**10.** The method according to claim 9, wherein said signal quality is determined by measurement and/or via a logical or physical feedback channel.

**11.** The method according to any of the preceding claims, wherein the forward error correction is adjusted pursuant to a bit error rate determined.

**12.** The method according to any of the preceding claims, wherein user data determine a block size comprising said forward error correction.

**13.** The method according to claim 12, wherein said block comprises data portions each comprising a forward error correction data.

**14.** The method according to any of claims 12 or 13, wherein said block is coded by utilizing adaptive interleaving.

**15.** The method according to any of the preceding claims utilized by an encoder, in particular by a transmitter comprising such encoder.

**16.** The method according to any of claims 1 to 14 utilized by a decoder, in particular by a receiver comprising such decoder.

**17.** A device for data processing comprising a processor unit that is arranged such that the method according of any of the preceding claims is executable on said processor unit.

**18.** The device according to claim 17, wherein said device is a communication device, in particular a transmitter and/or a receiver.

**19.** Communication system comprising the device according to any of claims 17 or 18.

# Fig.1

119 info bytes →|← 16 parity bytes →

| | |
|---|---|
| ▭ | Code word 1 |
| ▭ | Code word 2 |

•
•
•
•

k − (m-1)*119 info bytes

▭ Code word m

Transmission
order

EP 2 088 707 A1

# Fig.2

$$\left[\frac{k-1}{16}\right]+1 \text{ info bytes} \qquad 16 \text{ parity bytes}$$

Code word 1

Code word 2

$$k-16-16\left[\frac{k-1}{16}\right] \text{ info bytes}$$

Code word m

Transmission order

EP 2 088 707 A1

Fig.3

# Fig.4

| Length of information k (bytes) | Interleaving depth | Lengths of information data (bytes) | Length of coded packets n (bytes) |
|---|---|---|---|
| 1 ... 119 | 1 | k | 17 ... 135 |
| 120 ... 238 | 2 | 119, k-119 | 152 ... 270 |
| 239 ... 357 | 3 | 119,119, k-238 | 287 ... 405 |
| 358 ... 476 | 4 | 119,119,119,k-3*119 | 422 ... 540 |
| 477 ... 595 | 5 | 119, 119, ..., k-4*119 | 557 ... 675 |
| 596 ... 714 | 6 | 119, 119, ..., k-5*119 | 692 ... 810 |
| 715 ... 833 | 7 | 119, 119, ..., k-6*119 | 827 ... 945 |
| 834 ... 952 | 8 | 119, 119, ..., k-7*119 | 962 ... 1080 |
| 953 ... 1071 | 9 | 119, 119, ..., k-8*119 | 1097 ... 1215 |
| 1072 ... 1190 | 10 | 119, 119, ..., k-9*119 | 1232 ... 1350 |
| 1191 ... 1309 | 11 | 119, 119, ..., k-10*119 | 1367 ... 1485 |
| 1310 ... 1428 | 12 | 119, 119, ..., k-11*119 | 1502 ... 1620 |
| 1429 ... 1547 | 13 | 119, 119, ..., k-12*119 | 1637 ... 1755 |
| 1548 ... 1666 | 14 | 119, 119, ..., k-13*119 | 1772 ... 1890 |
| 1667 ... 1785 | 15 | 119, 119, ..., k-14*119 | 1907 ... 2025 |
| 1786 ... 3824 | 16 | See case 2 | 2042 ... 4080 |
| > 3824 | See case 3 | See case 3 | See case 3 |

EP 2 088 707 A1

# Fig.5

higher data rate to enterprise      large difference in distance to OLT

**European Patent Office**

**EUROPEAN SEARCH REPORT**

Application Number

EP 08 00 2303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 710 941 A (ST MICROELECTRONICS SRL [IT]) 11 October 2006 (2006-10-11) * paragraphs [0013] - [0017], [0057] * * table 1 * ----- | 1-19 | INV. H04L1/00 |
| X | US 6 198 748 B1 (BRUCKERT EUGENE J [US]) 6 March 2001 (2001-03-06) * column 1, line 12 - line 26 * * column 3, line 62 - column 4, line 47 * ----- | 1-6, 12-19 | |
| X | WO 2005/057837 A (ADAPTIVE SPECTRUM AND SIGNAL A [US]; CIOFFI JOHN M [US]) 23 June 2005 (2005-06-23) * page 26, line 2 - line 6 * * figures 3-6 * ----- | 1-19 | |
|  |  |  | **TECHNICAL FIELDS SEARCHED (IPC)** H04L |

The present search report has been drawn up for all claims

| Place of search | Date of completion of the search | Examiner |
|---|---|---|
| The Hague | 20 August 2008 | Borges, Pedro |

EPO FORM 1503 03.82 (P04C01)

## ANNEX TO THE EUROPEAN SEARCH REPORT
## ON EUROPEAN PATENT APPLICATION NO.

EP 08 00 2303

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2008

| Patent document cited in search report | | Publication date | Patent family member(s) | | Publication date |
|---|---|---|---|---|---|
| EP 1710941 | A | 11-10-2006 | US | 2006253763 A1 | 09-11-2006 |
| US 6198748 | B1 | 06-03-2001 | NONE | | |
| WO 2005057837 | A | 23-06-2005 | AU | 2004298118 A1 | 23-06-2005 |
| | | | CA | 2548743 A1 | 23-06-2005 |
| | | | EP | 1700410 A1 | 13-09-2006 |
| | | | JP | 2007513557 T | 24-05-2007 |
| | | | US | 2005138524 A1 | 23-06-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Y. Yi ; S. Verschuere et al.** Simulation and Experiments on the Effective Optical Gain of FEC in a GPON Uplink. *IEEE Photonics Technology Letters,* 15 January 2007, vol. 19 (2

- **D. Nesset ; R. Davey ; D. Shea ; P. Kirkpatrick ; S.Q. Shang ; M. Lobel ; B. Christensen.** 10Gbit/s Bidirectional Transmission in 1024-way Split, 110 km Reach, PON System using Commercial Transceiver Modules, Super FEC and EDC. *ECOC 2005,* 2005
- Gigabit-capable Passive Optical Networks (G-PON): Transmission convergence layer specification. *ITU-T G.984.3,* February 2004